# FASCICULE DE BREVET EUROPEEN

(11) **EP 1 516 177 B1**
(45) Date de publication et mention de la délivrance du brevet: **01.09.2010**
(21) Numéro de dépôt: 03760782.7
(22) Date de dépôt: 24.06.2003
(51) Int. Cl.: G01N 29/22, G01N 29/14

(54) **DISPOSITIF DE DETERMINATION DE MOUILLAGE D'UNE PAROI PAR UN LIQUIDE**
EINRICHTUNG ZUR BESTIMMUNG DER BENETZUNG EINER WAND DURCH EINE FLÜSSIGKEIT
DEVICE FOR DETERMINING THE WETTING OF A WALL BY A LIQUID

(30) Priorité: 25.06.2002 FR 0207848
(43) Date de publication de la demande: 23.03.2005
(73) Titulaire: Commissariat à l'Énergie Atomique et aux Énergies Alternatives, 75015 Paris (FR)
(72) Inventeur: DUCRET, Philippe Lotissement "Le Village", F-04220 CORBIERES (FR); JOGAND, Quentin, F-84240 LA MOTTE D'AIGUES (FR)
(74) Mandataire: Poulin, Gérard
(86) Numéro de dépôt international: PCT/FR2003/001943
(87) Numéro de publication internationale: WO 2004/001368

(56) Documents cités:
- EP-A- 0 250 291
- FR-A- 2 271 581
- GB-A- 1 123 939

## Description

Le sujet de cette invention est un dispositif de détermination de mouillage d'une paroi par un liquide. Un tel dispositif est décrit dans la demande de brevet EP 0 250 291A1.

Certains domaines de la technique nécessitent de s'intéresser à cette question et de déterminer par exemple si des parois de réservoirs, de tuyauteries, de sondes de mesure ou d'outils de réacteurs nucléaires sont mouillées en certains métaux pouvant être le sodium, le potassium, le plomb, le bismuth ou leurs alliages. Selon le cas, le mouillage est indispensable ou au contraire prohibé.

Le mouillage d'un solide par un liquide est un phénomène qui dépend de nombreux facteurs dont, outre la nature chimique du métal liquide et de la paroi, la pureté du liquide, l'état de surface de la paroi, la température, la nature et la présence de gaz occlus dans le liquide et le temps de mise en présence du métal liquide et de la paroi. Le mouillage peut être défini comme l'adhérence à l'échelle atomique du métal sur la paroi et n'est pas facile à déterminer directement. On a envisagé différents critères et modes de mesure pour déterminer le mouillage, son absence ou un état intermédiaire sur les parois d'un objet immergé dans un bain du métal liquide, en travaillant si nécessaire sur une éprouvette témoin de l'objet.

On a ainsi eu l'idée de corréler le mouillage à l'étalement d'une goutte ou l'ascension capillaire du métal liquide, mais sans obtenir de résultat très précis à cause des nombreux facteurs influant.

L'invention appartient à une catégorie différente de procédés et comprend deux modes fondamentaux de réalisation, mais qui sont étroitement apparentés puisqu'ils reposent sur la transmission d'ondes ultrasonores à travers l'interface de la paroi et du liquide. L'un d'entre eux est un dispositif de détermination de mouillage d'une paroi par un liquide, **caractérisé en ce qu**'il comprend : une capacité au liquide ; un objet témoin de la paroi placé dans la capacité ; un émetteur et un récepteur d'ondes ultrasonores ; et deux guides d'ondes traversant la capacité, situés en prolongement, l'émetteur et le récepteur étant montés respectivement sur des extrémités des guides d'ondes s'étendant hors de la capacité, et l'objet étant placé entre les guides d'ondes ; l'objet ayant une épaisseur choisie pour favoriser le passage des ondes provenant de l'émetteur. Et l'autre est un dispositif de détermination de mouillage d'une paroi par un liquide, **caractérisé en ce qu'**il comprend : une capacité au liquide ; un objet témoin de la paroi placé dans la capacité ; un émetteur et un récepteur d'ondes ultrasonores ; et deux guides d'ondes traversant la capacité, situés côte à côte, l'émetteur et le récepteur étant montés respectivement sur des extrémités des guides d'ondes d'étendant hors de la capacité, et l'objet étant placé devant les guides d'ondes, l'objet ayant une surface frontale choisie pour favoriser les réflexions des ondes entre les guides d'ondes.

Dans bien des cas concrets, où le liquide étudié est un métal fondu, il convient que la capacité soit équipée d'un moyen de chauffage ; les guides d'ondes seront alors équipés d'un moyen de refroidissement situé hors de la capacité, et qui pourra consister en une boîte entourant chacun des guides d'ondes entre la capacité et soit l'émetteur, soit le récepteur.

L'invention sera maintenant décrite dans tous ses développements au moyen des figures suivantes :
- la figure 1 est une vue générale d'un dispositif selon l'invention,
- les figures 2A, 2B, 2C, et 2D illustrent des signaux mis en jeu,
- et les figures 3A et 3B, 4, 5 et 6A, 6B et 6C illustrent d'autres modes de réalisation de l'invention.

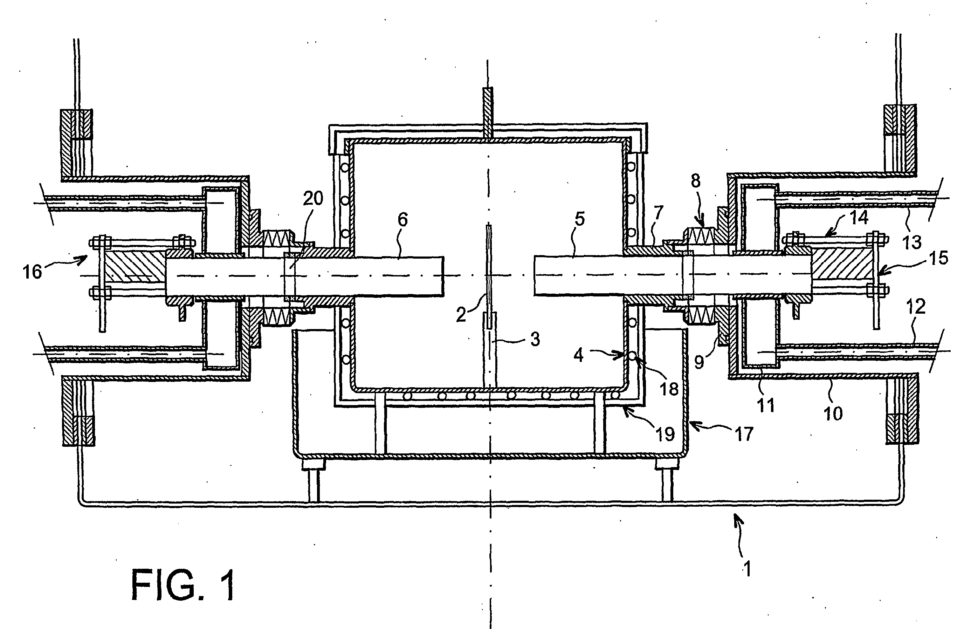

La figure 1 décrit un premier dispositif de réalisation de l'invention. Il est formé dans une enceinte 1 qui permet d'y insuffler l'atmosphère de composition voulue et contient une cible 2 qui est un simulacre de la paroi à étudier et qui se trouve, soutenue par un support 3, dans une capacité 4 incluse dans l'enceinte 1. Deux guides d'ondes 5 et 6 se faisant face pénètrent dans la capacité 4 et s'arrêtent à quelque distance de la cible 2. L'étanchéité de la capacité 4 est garantie par des manchons de passage 7 pour les guides d'ondes 5 et 6, dont les extrémités sont soudées à la capacité 4 et à une collerette 20 saillante à une section des guides d'ondes 5 et 6 hors de la capacité 4. Des soufflets 8 prolongent les manchons de passage 7 et s'étendent jusqu'à des brides 9 raccordées à des boîtiers 10 eux-mêmes fixés par l'arrière à l'enceinte 1. Le fond des boîtiers 10 (près des brides 9) est occupé par des boîtes à eau 11 dont le contenu est renouvelé par des conduites d'entrée et de sortie 12 et 13. Les guides d'ondes 5 et 6 traversent les boîtes à eau 11 qui sont évidées en leur centre, et leurs extrémités sont équipés de supports 14 de traducteurs d'ondes ultrasonores 15 et 16 dont le premier est destiné à l'émission des ondes ultrasonores et le second à leur réception. La référence 17 désigne globalement une structure de support de la capacité 4 dans l'enceinte 1 et la référence 18 un moyen de chauffage de la capacité 4 pour mener l'expérience à la température souhaité. La double soudure des manchons de passage 17 rend la capacité 4 étanche, et les boîtes à eau 11 constituent un moyen de refroidissement qui agit comme un barrage à la chaleur s'écoulant par le guide d'ondes 5 et 6 et qui aurait pu atteindre les traducteurs 15 et 16. Les soufflets 8 couvrant la partie chaude des guides d'ordres 5 et 6 protègent l'extérieur. Un écran thermique 19 est disposé aussi autour de la capacité 4.

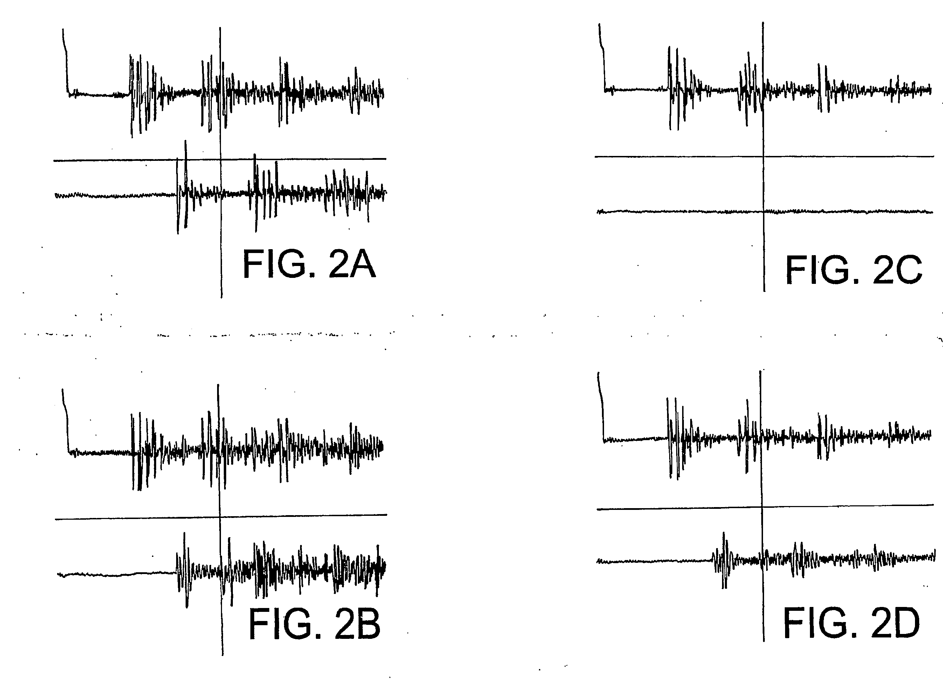

Les figures suivantes montrent quelques exemples de signaux obtenus avec l'invention à travers un liquide mouillant, la trace supérieure représentant le signal émis et la trace inférieure le signal reçu. A la figure 2A la cible 2 était enlevée ; dans le cas de la figure 2B la cible 2 était installée à l'état mouillé ; dans le cas de la figure 2C elle était installée mais non mouillée ; enfin, la figure 2D illustre un mouillage intermédiaire (partiel) de la cible 3. L'absence totale ou partielle de mouillage était reproduite par simulation, en couvrant la cible 2 d'un feuille adhésive sous laquelle du gaz était occlus.

L'épaisseur de la cible 2 est choisie pour offrir une transparence maximale et elle est plus précisément égale à la demi-longueur d'onde des ultrasons mis en oeuvre. La figure 2A montre du liquide,

qui produit une atténuation modérée des ondes laissant apparaître un signal récepteur important (462 millivolts à l'origine).

Chacun des signaux comprend aussi, après le premier train d'ondes qui représente l'impulsion fournie, des échos successifs produits par des réflexions multiples aux extrémités du guide d'ondes 5 ou 6.

La figure 2B montre l'influence de l'atténuation par la cible 2, qui ne laisse subsister qu'un signal de 70 millivolts. On remarque aussi que le signal mesuré du côté du guide d'ondes 5 émetteur comprend des échos provenant de réflexions des ondes sur la cible 2.

La figure 2C montre la disparition presque totale du signal reçu, l'énergie émise étant alors absorbée sur les surfaces de la cible 2. Enfin, les résultats obtenus à la figure 2D sont intermédiaires avec une valeur à l'origine de 40 millivolts.

Ainsi, le degré de mouillage de la cible 2 apparaît comme proportionnel à l'intensité du signal qui a pu traverser la cible 2, en fonction bien sûr de l'intensité du signal émis. C'est l'intensité à l'origine du signal reçu qui doit être considérée.

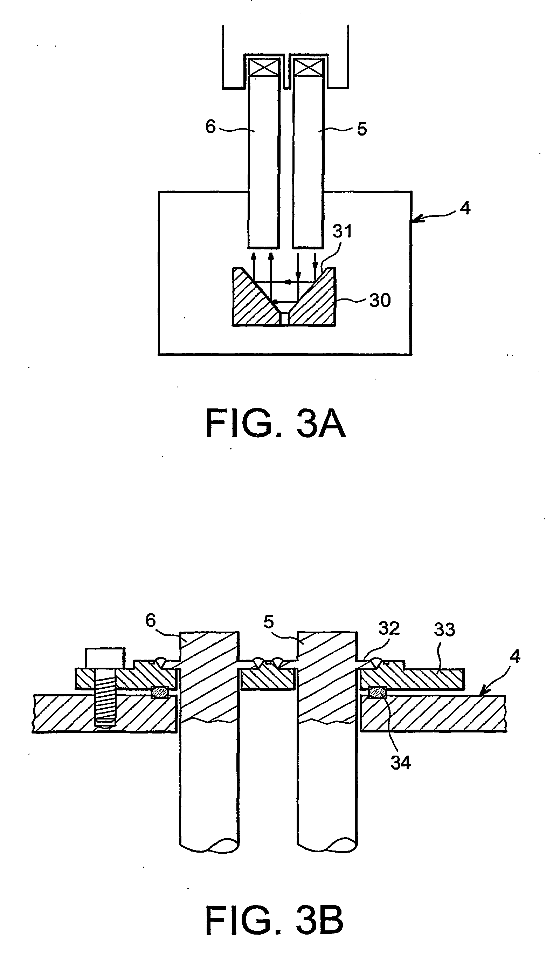

Certaines modifications de la conception exposée complètement ci-dessus seront maintenant présentées plus succinctement. A la figure 3A, on voit ainsi que les guides d'ondes 5 et 6 peuvent être disposés côte à côte pour peu que la cible, ici référencée par 30, soit de forme appropriée, par exemple concave, et renvoie les ondes originaires du premier guide d'ondes 5 vers le second (6) après avoir subi deux réflexions dans une entaille 31. Comme le montre la figure 3B, un montage étanche des guides d'ondes 5 et 6 à travers la paroi de la capacité 4 est obtenu en soudant lesdits guides, à l'endroit d'une collerette 32, à une bride 33 bouchant une ouverture de la paroi de capacité 4. Les guides d'ondes 5 et 6 passent à travers des ouvertures respectives de la bride 33. Un joint d'étanchéité 34 est serré entre la capacité 4 et la bride 33.

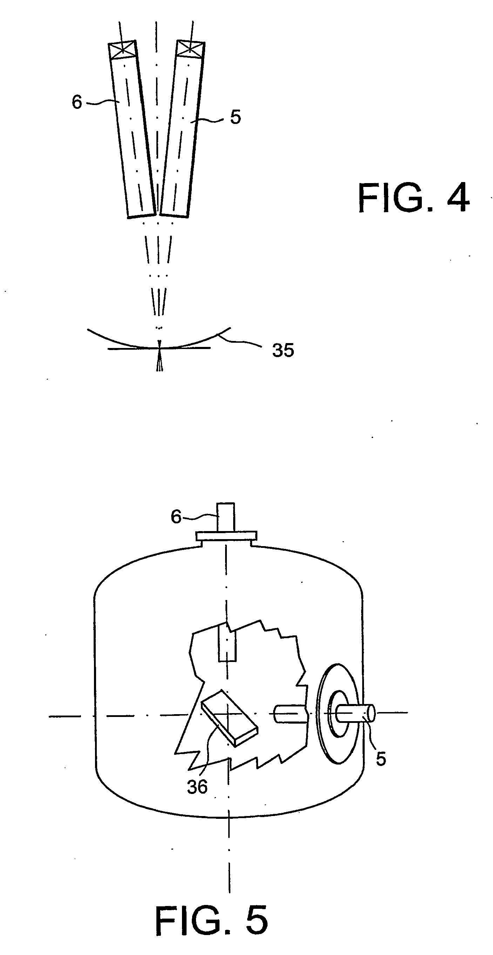

Dans le mode de réalisation de la figure 4, les guides d'ondes 5 et 6 ne sont plus parallèles mais concourants, la cible 35 étant cette fois concave et une seule réflexion d'ondes étant produite sur elle. A la figure 5, les deux guides d'ondes 5 et 6 sont disposés à angle droit, une réflexion étant produite sur une cible 36 qui est cette fois de forme plane.

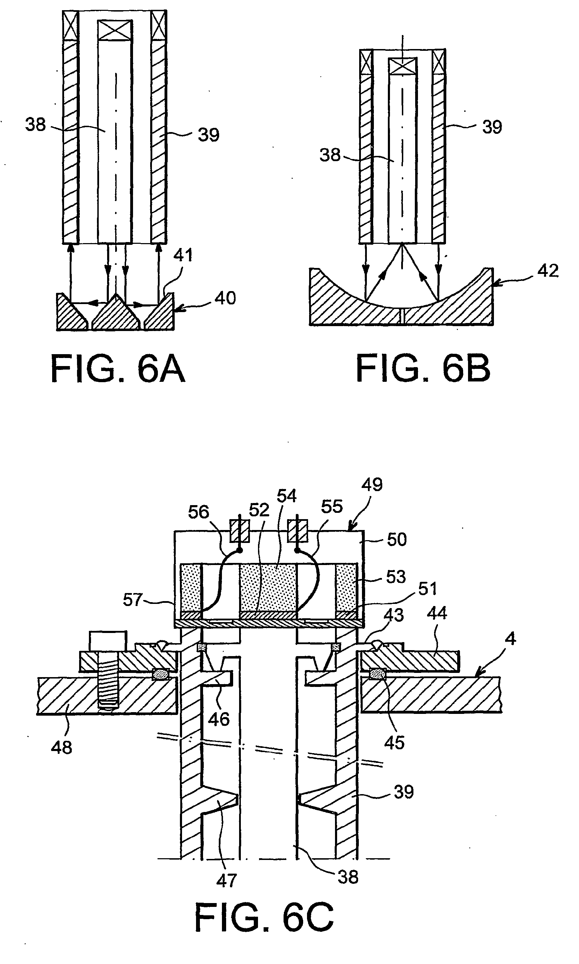

Les figures 6A et 6B illustrent des réalisations complémentaires d'une autre conception, où les guides d'ondes 5 et 6 semblables sont remplacés par des guides d'ondes concentriques, dont un guide d'ondes intérieur 38 analogue aux précédents (cylindrique) et un guide d'ondes extérieur 39 tubulaire. Dans la réalisation de la figure 6A, le guide d'ondes intérieur est émetteur et les ondes subissent une double réflexion sur une cible 40 munie d'une entaille circulaire 41 présentant, comme à la figure 3A, une section triangulaire. Mais dans la réalisation de la figure 6B, le guide d'ondes extérieur 39 est émetteur et les ondes se réfléchissent vers l'entrée du guide d'ondes intérieur 38 après avoir subi une réflexion sur une cible 42 pourvue d'une empreinte arrondie comme la cible 35 précédente.

Le mode de réalisation de l'arrière du dispositif pourrait être celui de la figure 6C, le guide d'ondes extérieur 39 comprenant une collerette 43 soudée à une bride 44 vissée à la paroi de la capacité 4 et enserrant un joint 45 dans le périmètre de la partie tubulaire dévolue à la conduction d'ondes ; le guide d'ondes extérieur 39 comprend encore une collerette interne 46 d'appui du guide d'ondes intérieur 38 et une collerette 47 de centrage du même guide d'ondes intérieur 38 est située sous la précédente. Une couronne 48 d'appui du guide d'ondes intérieur 38 est posée sur la collerette interne 46. Un traducteur 49 unique est posé. Il est à double fonction, c'est-à-dire qu'il comprend un noyau 50 unique sous lequel les éléments piézo-électriques 51 et 52 d'émission et de réception sont déposés. Des amortisseurs 53 et 54 sont logés derrière les éléments piézo-électriques 51 et 52 dans les cavités du noyau 50. Des conducteurs électriques 55 et 56 relient les éléments piézo-électriques à des portions de génération et de mesure de signal non représentées. Enfin, une lame avant 57 couvre les éléments 51 et 52 et assure le lien avec les guides d'ondes 38 et 39.

Tous ces derniers modes de réalisation sont conçus pour une interprétation des signaux en mode de réflexion, qui diffère de celle du mode en transmission de la réalisation de la figure 1. Ici, aucun signal ne revient vers le récepteur en l'absence de la cible. En présence de la cible, le signal de réception est toujours présent, mais présente un déphasage variable par rapport au signal émis selon le degré de mouillage. Quand le mouillage est complet, ce déphasage est nul, alors que le déphasage est maximal en l'absence de mouillage. Une analyse temporelle détaillée des signaux doit donc être entreprise ici.

En général, il importe que les guides d'ondes résistent à la chaleur du liquide si celui-ci est un métal fondu. Ils peuvent être métalliques par exemple, ou composés d'une enveloppe renfermant un autre liquide. Il importe aussi que le liquide baignant la cible les mouille parfaitement, ce qu'on peut parfois assurer en les revêtant d'un corps idoine, qui n'a pas d'autre fonction que d'assurer ce mouillage.

## Revendications

1. Dispositif de détermination de mouillage d'une paroi par un liquide comprenant: une capacité (4) au liquide ; un objet (2) témoin de la paroi placé dans la capacité ; un émetteur et un récepteur (15, 16) d'ondes ultrasonores et deux guides d'ondes (5, 6) traversant la capacité, situés en prolongement, l'émetteur et le récepteur étant montés respectivement sur des extrémités des guides d'ondes s'étendant hors de la capacité, et l'objet (2) étant placé entre les guides d'ondes ; l'objet (2) ayant une épaisseur choisie pour favoriser le passage des ondes provenant de l'émetteur.

2. Dispositif de détermination de mouillage d'une paroi par un liquide comprenant: une capacité (4) au liquide ; un objet (2) témoin de la paroi placé dans la capacité ; un émetteur et un récepteur d'ondes ultrasonores ; et deux guides d'ondes traversant la capacité, situés côte à côte, l'émetteur et le récepteur étant montés respectivement sur des extrémités des guides d'ondes s'étendant hors de la capacité, et l'objet (2) étant placé devant les guides d'ondes, l'objet ayant une surface frontale de forme appropriée, choisie pour favoriser les réflexions des ondes entre les guides d'ondes.

3. Dispositif selon l'une quelconque des revendications 1 et 2, **caractérisé en ce que** la capacité (4) est équipée d'un moyen de chauffage, et les guides d'ondes d'un moyen de refroidissement situé hors de la capacité.

4. Dispositif selon la revendication 3, **caractérisé en ce que** le moyen de refroidissement consiste en une boîte entourant chacun des guides d'ondes entre le capacité et soit l'émetteur, soit le récepteur.

5. Dispositif selon l'une quelconque des revendications 1 à 4, **caractérisé en ce que** le guide d'ondes est couvert d'un revêtement favorisant un mouillage du liquide dans la capacité.

6. Dispositif selon l'une quelconque des revendications 1 à 5, **caractérisé en ce qu'**il comprend un système d'étanchéité et d'isolation thermique autour des guides d'ondes.

7. Dispositif selon les revendication 4 et 6 **caractérisé en ce que** le système d'étanchéité comprend une collerette disposée autour d'une section des guides d'ondes et unie à une bride ou un manchon fixé à la capacité, ou à la capacité elle-même ; et le système d'isolation thermique comprend un manchon ou un soufflet isolant s'étendant entre la collerette et la boîte de refroidissement.

## Claims

1. A device for determining the wetting of a wall by a liquid, comprising: a capacity (4) for the liquid; a control object (2) of the wall placed in the capacity; an emitter and a receiver (15, 16) of ultrasonic waves, and two waveguides (5, 6) passing through the capacity, located in extension, the emitter and receiver being respectively mounted on ends of the waveguides extending out of the capacity, and the object (2) being placed between the waveguides; the object (2) having a thickness selected for favoring the passing of waves from the emitter.

2. A device for determining the wetting of a wall by a liquid, comprising: a capacity (4) for the liquid; a control object (2) of the wall placed in the capacity; an emitter and a receiver of ultrasonic waves; and two waveguides passing through the capacity, located side-by-side, the emitter and the receiver being respectively mounted on ends of the waveguides extending out of the capacity, and the object (2) being placed in front of the waveguides, the object having a front surface having an appropriate shape, selected for favoring reflections of the waves between the waveguides.

3. The device according to any of claims 1 and 2, **characterized in that** the capacity (4) is equipped with heating means and the waveguides with cooling means located outside the capacity.

4. The device according to claim 3, **characterized in that** the cooling means consists of a case surrounding each of the waveguides between the capacity and either the emitter or the receiver.

5. The device according to any of claims 1 to 4, **characterized in that** the waveguide is covered with a coasting which favors wetting of the liquid in the capacity.

6. The device according to any of claims 1 to 5, **characterized in that** it comprises a sealing and heat insulation system around the waveguides.

7. The device according to claim 4 and 6, **characterized in that** the sealing system comprises a flange positioned around a section of the waveguides and joined to a bracket or a sleeve attached to the capacity, or to the capacity itself; and the heat insulation system comprises a sleeve or insulating bellows extending between the flange and the cooling case.

## Patentansprüche

1. Vorrichtung zur Bestimmung der Benetzung einer Wand durch eine Flüssigkeit, umfassend: eine Flüssigkeitskapazität (4); ein in der Kapazität platziertes Musterobjekt (2) der Wand; einen Sender und einen Empfänger (15, 16) von Ultraschallwellen und zwei fluchtend angeordnete, die Kapazität durchquerende Wellenleiter (5, 6), wobei der Sender und der Empfänger jeweils auf sich außerhalb der Kapazität erstreckende Enden der Wellenleiter montiert sind und das Objekt (2) zwischen den Welienleitern platziert ist; wobei das Objekt (2) eine Dicke hat, die so gewählt ist, dass sie den Durchgang der von dem Sender kommenden Wellen begünstigt.

2. Vorrichtung zur Bestimmung der Benetzung einer Wand durch eine Flüssigkeit, umfassend: eine Flüssigkeitskapazität (4); ein in der Kapazität platziertes Musterobjekt (2) der Wand; einen Sender und einen Empfänger von Ultraschallwellen; und zwei die Kapazität durchquerende Wellenleiter, Seite an Seite angeordnet, wobei der Sender und der Empfänger jeweils auf sich außerhalb der Kapazität erstreckende Enden der Wellenleiter montiert sind und das Objekt (2) vor den Wellenleitern platziert ist, wobei das Objekt eine frontale Fläche von entsprechender Form hat, so gewählt, dass die Reflexionen der Wellen zwischen den Wellenleitern begünstigt sind.

3. Vorrichtung nach einem der Ansprüche 1 und 2, **dadurch gekennzeichnet, dass** die Kapazität (4) eine Heizeinrichtung umfasst und die Wellenleiter eine außerhalb der Kapazität befindliche Kühleinrichtung umfassen.

4. Vorrichtung nach Anspruch 3, **dadurch gekennzeichnet, dass** die Kühleinrichtung aus einem jeden der Wellenleiter zwischen der Kapazität und entweder dem Sender oder dem Empfänger umgebende Gehäuse besteht.

5. Vorrichtung nach einem der Ansprüche 1 bis 4, **dadurch gekennzeichnet, dass** der Wellenleiter mit einer Beschichtung überzogen ist, die in der Kapazität eine Benetzung der Flüssigkeit bzw. durch die Flüssigkeit begünstigt.

6. Vorrichtung nach einem der Ansprüche 1 bis 5, **dadurch gekennzeichnet, dass** sie ein Abdichtung- und Wärmeisoiationssysfiem um die Wellenleiter herum umfasst.

7. Vorrichtung nach Anspruch 4 und 6, **dadurch gekenntzeichnet, dass** das Abdichtungssystem einen Kragenring umfasst, der einen Querschnitt der Wellenleiter umgibt und mit einem Flansch oder einer Manschette, befestigt an der Kapazität, oder mit der Kapazität selbst vereinigt ist; und das Wärmeisoiationssystem eine Manschette oder einen sich zwischen dem Kragenring und dem Kühlgehäuse erstreckenden isolierenden Faltenbalg umfasst.
